# EUROPEAN PATENT SPECIFICATION

(11) **EP 2 878 866 B1**
(45) Date of publication and mention of the grant of the patent: **26.10.2016**
(21) Application number: 14192307.8
(22) Date of filing: 07.11.2014
(51) Int. Cl.: F16K 13/10, F16K 31/00

(54) **Safety valve for gas-carrying ducts**
Sicherheitsventil für gasführende Leitungen
Soupape de sécurité pour des conduits à gaz.

(30) Priority: 15.11.2013 IT TV20130184
(43) Date of publication of application: 03.06.2015
(73) Proprietor: MICROPROGEL SRL, 35038 Torreglia (PD) (IT)
(72) Inventor: Gaffo, Valter, 35038 Torreglia (PD) (IT)
(74) Representative: Citron, Massimiliano

(56) References cited:
- EP-A1- 2 127 747
- WO-A1-2012/001380
- DE-C- 509 126
- US-A- 4 024 882
- US-A- 4 267 853

## Description

The invention relates to a safety valve for gas-carrying ducts, in particular H₂ discussed here as an example.

Pure hydrogen (H₂) obtained by laboratory generators (such e.g. that in EP2371438) is often used as carrier gas e.g. in gas-chromatography, as an alternative to helium or other inert gases, or as comburent for FID detectors (Flame Ionization Detector).

Gas-chromatography is a known technique of analytical chemistry that is based on a partition of the mixture to be analyzed between a stationary phase and a moving phase, depending on the different affinities of every substance in the mixture with the phases. Instrumentally, in the most elementary form, it is based on a small, carefully thermo-regulated oven in which is housed a chromatographic column. This is essentially formed by a winding made of a thin, capillary glass tube, a few meters long, on the internal walls of which a thin layer has been deposited of the fixed phase (a sufficiently stable substance to which the mixture to be analyzed shows a certain degree of affinity). The sample is mixed with a flow of inert gas (e.g. He, H₂, N₂) and introduced at one end of the tube. After some time the separate components escape with the gas flow from the opposite end side, where an appropriate detector is located.

Laboratory generators of pure inert gas, especially hydrogen, in case of failure might release liquid water together with the gas, despite being designed with different safety systems for avoiding that. Unfortunately gas-chromatographs are not only very expensive, but their pneumatic system and detectors are very sensitive to water, which can seriously damage them. Since it is an expensive and time-consuming operation to repair them, and to leave them under maintenance compromises the course of the analysis, one understands how important it is to find a solution.

Documents WO 2012/001380,US 4,024,882 and EP 2 127 747 disclose valves with a swellable material.

To overcome this problem is the object of the invention, which is defined in the appended claims, wherein the dependent ones define advantageous variants.

It is proposed a safety valve, for ducts carrying a gas flow, adapted to block the flow when liquid water is present in the gas, comprising a conduit, for carrying the gas, having inside
a material which is water-soluble and solid at room temperature or use temperature between 0 and 50 °C,
the conduit and the material being configured so that the material melts in contact with the water molecules and by fluidifying obstructs the conduit.

Some advantages of such a valve are that it is simple to build, has few components, is cheap to produce, is easily replaceable and can be installed on pipes or equipment that already exists.

The material can be selected from various types. E.g. it can be a water-soluble polymer of synthetic origin, such as PVA (or Ethanol or Poliviol) or its derivatives or mixtures with it, such as Hydrolene® or Aquazol®. Or the material can have organic or animal origin, such as gelatin or sturgeon glue.

In the valve the conduit preferably comprises a reduction of its inner section. The advantage is to have a restriction of the conduit which increases the effectiveness or the likelihood of effectiveness of the "plug" that the material is to form to block the flow.

Preferably, the material is placed at the gas inlet into the reduction, so as to increase the response speed of the valve because the plug forms sooner.

The restriction can comprise a second conduit which is (i) inserted into the first and (ii) has a passage-section smaller than that of the first conduit. This is a very simple solution to create the restriction, which does not deform the outer conduit, and allows good calibration of the passage-sections.

It is also proposed a gas-chromatograph comprising a valve as defined above (in all variants). As mentioned in the introduction, applying the valve to these machines gives special or specific advantages, especially the safeguard from the water present inside the gas that reduces the dead times and extends the operating life.

It is also proposed a method for blocking a gas flow, inside a duct that conveys it, when in the gas water is present in liquid form, comprising
placing inside the duct a water-soluble material (as defined above in all mentioned variants),
so that the material melts in contact with the water and by fluidifying obstructs the conduit.

The method preferably takes advantage of the variants described for the material or valve, e.g.
- reducing the internal section of the duct,
- placing the material at the inlet of the gas into the reduction,
- forming the restriction with a second duct (i) inserted into the first and (ii) having a passage-section lower than that of the latter.

The advantages of the invention will be more apparent from the following description of a preferred embodiment of valve, with reference to the attached drawing in which
Fig. 1 shows a longitudinal sectional view of a valve in open configuration;
Fig. 2 shows a longitudinal sectional view of the valve in Fig. 1 in closed configuration.

In the figures, same numerals indicate same parts.

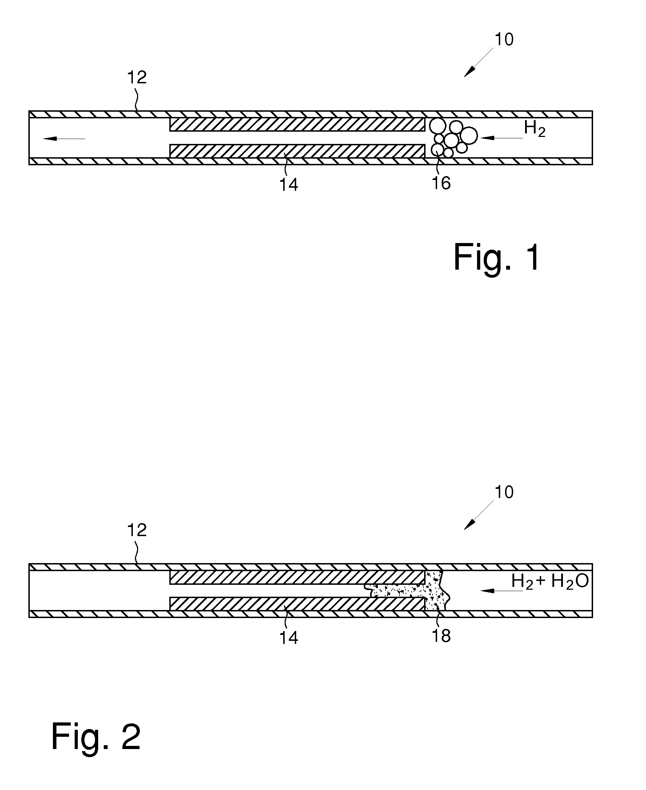

Fig. 1 shows a valve 10 constituted by a tube 12 in which inert gas H₂ flows from right to left (see arrows) for feeding e.g. a gas-chromatograph set downstream (not shown).

The tube 10 has, e.g. at the center, a diameter or section restriction 14, e.g. having a passage-section with a diameter of few tenths of a millimeter. The restriction 14 can be created in various ways, e.g. through a pipe, e.g. capillary (e.g. made of steel), inserted into the tube 12, which in turn can be a tube of Teflon.

To give numeric values for the diameters of the pipes, we say e.g.: for an application to control the flow of hydrogen, with a flow-rate up to 1000 cc/min, the outer tube 12 can be made of PTFE (Teflon), with 3,17 mm (1/8") outer diameter and 1,9 mm (0.075") inner diameter. As to the length, for example 5 cm. The inner tube 14 can be made of AISI 316, with outer diameter of 1,6 mm (1/16"), inner diameter of 0,5 mm, and length of 3 cm.

The PVA has conformation e.g. of small parts of irregular shape, having average size of 1,5 mm and in any case greater than 1,0 mm. E.g. it only takes a quantity thereof of 2 mg.

As a minimum amount of material one can use the double or more of the volume of the restriction 14 (i.e. the volume of the internal cavity of the thinner tube or restriction (14) in which the gas flows) or of the cavity of the external tube 12, when the inner one 14 is not present.

The inner diameter of the restriction 14 is chosen experimentally depending on the viscosity of the water-soluble material 16 used. These experimental criteria have proven to be the best in terms of cost, efficiency and reliability (e.g. to allow that the fluidized material occludes well the tube 12 or 14).

The construction using two tubes 12, 14 inserted one inside the other has the advantage of being cheap and easily assembled because the seal between the two tubes 12, 14 can take place simply by using a double-ogive fitting (ferrule), e.g *Swagelok.* The outer tube 12 is compressed towards the internal pipe 14 by closing the connection.

This does not prevent to make the restriction 14 out of other materials, e.g. plastic, aluminum, brass, steel. The final "structure" of the valve, however, must withstand the working pressures.

Inside the tube 12, at the inlet of the restriction 14 (where hydrogen comes in to cross it and comes out the other end of the tube 12) there is placed material 16, e.g. PVA. The PVA is polyvinyl alcohol, which is solid at room temperature. PVA is a chemical compound obtained by hydrolysis, normally alkaline, of polyvinyl esters, is soluble in water and insoluble in organic solvents, and does not have permeability to gases.

When water, even in small quantities, arrives in the tube 12 together with the inert gas, it meets the PVA and the latter melts. The PVA, now fluid, enters the restriction 14 (Fig. 2) and its density does not allow it to get through. A sort of PVA plug 18 forms inside the restriction 14 which permanently locks the passage of gas through the tube 12. The water therefore will not be able to get to the gas-chromatograph to damage it, but simply the flow of hydrogen will be prevented and the instrument will signal its lack.

The accessible diameter of the restriction 14 is not critical, and must be adapted to the inert gas flow. In the example, the flow rate is the average rate in a laboratory hydrogen generator, which can vary from 100 cc/min to 1200 cc/min and at pressures of 2 to 10 bar.

By properly calibrating the diameter of the restriction 14 as a function of the running flow-rate and the flows, the valve 10 can be applied to all laboratory gases and to any source, as well as for example to cylinders, where liquid water can be a harmful element for downstream equipments. As a criterion, one can calculate the diameter of the restriction so that a significant load loss as a function of flow and pressures is not generated.

The duct 12, 14 can be curved or flexible, since there are not working problems in such a case.

Other advantages of the valve are that it does not employ hazardous materials, its operation is intrinsically safe, and it can also easily be installed on existing machines.

The viscosity of the material when is fluid can be chosen experimentally to ensure the occlusion effect, and also in relation to the section of the duct in which the fluidized material should stuck. E.g. between 100 and 800 cps, preferably greater than 1000 cps.

## Claims

1. Safety valve (10), for ducts carrying a gas flow (H₂), adapted to block the flow when liquid water is present in the gas, comprising
a conduit (12, 14), for carrying the gas, having inside a material (16) which is water-soluble and solid at room temperature or at use temperature between 0 and 50 °C,
the conduit and the material being configured so that the material melts in contact with the water molecules and by fluidifying obstructs (18) the conduit.

2. Valve according to claim 1, wherein the conduit comprises a reduction (14) of its inner section.

3. Valve according to claim 2, wherein the material is placed at the gas inlet into the reduction.

4. Valve according to claim 2 or 3, wherein the restriction comprises a second conduit (14) which is (i) inserted into the first and (ii) has a passage-section smaller than that of the first conduit.

5. Valve according to any one of the preceding claims, wherein the material is a water-soluble polymer.

6. Valve according to claim 5, wherein the material is, or comprises, PVA.

7. Valve according to any one of the preceding claims 1 to 4, wherein the material is gelatin or sturgeon glue.

8. Valve according to any one of the preceding claims, wherein the amount of material is the double or more than the void volume of the restriction's (14) conduit adapted to let the gas transit.

9. Valve according to any one of the preceding claims, wherein the viscosity of the fluidified material is between 100 and 800 cps, preferably greater than 1000 cps.

10. Gas-chromatograph comprising a valve (10) as defined in any one of the preceding claims.

11. Method for blocking a flow of gas, inside a duct that conveys it, when in the gas water is present in liquid form, comprising placing inside the duct a water-soluble material as defined in one of the preceding claims, so that the material melts in contact with the water and by fluidifying obstructs (18) the conduit.

12. Method according to claim 11, with the further step of reducing the internal section of the duct.

13. Method according to claim 11 or 12, with the further step of placing the material at the inlet of the gas into the reduction.

14. Method according to claim 11 or 12 or 13, with the further step of forming the restriction with a second duct (i) inserted into the first and (ii) having a passage-section lower than that of the latter.

## Patentansprüche

1. Sicherheitsventil (10) für Leitungen zum Führen von einem Gasdurchfluss (H₂), um den Durchfluss zu blockieren, wenn im Gas flüssiges Wasser vorhanden ist, einschließlich
einer Leitung (12, 14), um das Gas zu transportieren, mit
einem Material (16) im Innern, das bei Raumtemperatur oder Einsatz bei 0 bis 50 °C wasserlöslich und solide ist.
Die Leitung und das Material sind so konfiguriert, dass das Material beim Kontakt mit Wassermolekülen schmilzt und durch Verdünnen (18) die Leitung blockiert.

2. Ventil nach Anspruch 1, wobei die Leitung eine Reduktion (14) der internen Kammer beinhaltet.

3. Ventil nach Anspruch 2, wobei sich das Material am Eingang vom Gas in der Reduktion befindet.

4. Ventil nach Anspruch 2 oder 3, wobei die Begrenzung eine zweite Leitung (14) beinhaltet, welche in der ersten Kammer (i) im unteren Durchgang (ii) gegenüber der Letzteren eingefügt ist.

5. Ventil nach einem der vorhergehenden Ansprüche, wobei das Material ein wasserlösliches Polymer ist.

6. Ventil nach Anspruch 5, wobei das Material aus PVA ist, bzw. dieses enthält.

7. Ventil nach einem der Ansprüche von 1 bis 4, wobei das Material Gelatine oder Störleim ist.

8. Ventil nach einem der vorhergehenden Ansprüche, wobei die Materialmenge doppelt oder mehr als der leere Rauminhalt der Begrenzung (14) ist, um das Gas durchzulassen.

9. Ventil nach einem der vorhergehenden Ansprüche, wobei die Viskosität des verdünnten Materials zwischen 100 cps und 800 cps, vorzugsweise mehr als 1000 cps beträgt.

10. Gas-Chromatograph bestehend aus einem Ventil (10), wie in einem der vorhergehenden Ansprüche definiert.

11. Methode, um einen Gasdurchfluss in einer Leitung zu blockieren, welche diesen führt, wenn im Gas flüssiges Wasser vorhanden ist, einschließlich
dem Platzieren von einem wasserlöslichen Material in der Leitung, wie in einem der vorhergehenden Ansprüche definiert,
so dass das Material beim Kontakt mit Wasser schmilzt und durch Verdünnen (18) die Leitung blockiert.

12. Methode nach Anspruch 11, mit der zusätzlichen Phase der Reduzierung der internen Kammer in der Leitung.

13. Methode nach Anspruch 11 oder 12, mit der zusätzlichen Phase, das Material am Eingang des Gases in der Reduktion anzuordnen.

14. Methode nach Anspruch 11, 12 oder 13 mit der zusätzlichen Phase, mit einer zweiten Leitung (i) die Begrenzung zu bilden, welche in der ersten Kammer im unteren Durchgang (ii) gegenüber der Letzteren eingefügt ist.

## Revendications

1. Soupape de sécurité (10) destinée aux conduites transportant un flux de gaz (H₂), en mesure de bloquer le flux lorsque de l'eau liquide est présente dans le gaz, comprenant
une conduite (12, 14) pour transporter le gaz, contenant
un matériau (16) qui est hydrosoluble et solide à température ambiante ou à une température d'utilisation comprise entre 0 et 50 C°,
la conduite et le matériau étant configurés de manière à ce que le matériau se dissolve au contact des molécules d'eau et, en se fluidifiant, obstrue (18) la conduite.

2. Soupape selon la revendication 1, dans laquelle la conduite comporte une réduction (14) de sa section interne.

3. Soupape selon la revendication 2, dans laquelle le matériau est placé au niveau de l'entrée du gaz dans la réduction.

4. Soupape selon la revendication 2 ou 3, dans laquelle la restriction comprend une seconde conduite (14) qui est (i) insérée dans la première et (ii) dont la section de passage est inférieure à celle de la première.

5. Soupape selon l'une quelconque des revendications précédentes, dans laquelle le matériau est un polymère hydrosoluble.

6. Soupape selon la revendication 5, dans laquelle le matériau est, ou comprend, du PVA.

7. Soupape selon l'une quelconque des revendications 1 à 4, dans laquelle le matériau est de la gélatine ou de la colle d'esturgeon.

8. Soupape selon l'une quelconque des revendications précédentes, dans laquelle la quantité de matériau représente le double ou plus du volume vide de la conduite de la restriction (14) en mesure de laisser passer le gaz.

9. Soupape selon l'une quelconque des revendications précédentes, dans laquelle la viscosité du matériau fluidifié se situe entre 100 cps et 800 cps, et de préférence supérieure à 1000 cps.

10. Chromatographe à gaz comprenant une soupape (10) telle que définie dans l'une quelconque des revendications précédentes.

11. Méthode pour bloquer un flux de gaz à l'intérieur d'une conduite transportant celui-ci lorsque de l'eau sous forme liquide est présente dans le gaz, consistant à
placer à l'intérieur de la conduite un matériau hydrosoluble tel que défini dans l'une des revendications précédentes,
de manière à ce que ledit matériau se dissolve au contact de l'eau et, en se fluidifiant, obstrue (18) la conduite.

12. Méthode selon la revendication 11, comportant l'étape supplémentaire de réduction de la section interne de la conduite.

13. Méthode selon la revendication 11 ou 12, comportant l'étape supplémentaire de disposition du matériau au niveau de l'entrée du gaz dans la réduction.

14. Méthode selon la revendication 11 ou 12 ou 13, comportant l'étape supplémentaire de constitution de la restriction au moyen d'une seconde conduite (i) insérée dans la première et (ii) dont la section de passage est inférieure à celle de la première.
